# FASCICULE DE BREVET EUROPEEN

(11) **EP 2 440 604 B1**
(45) Date de publication et mention de la délivrance du brevet: **30.03.2016**
(21) Numéro de dépôt: 09779688.2
(22) Date de dépôt: 09.06.2009
(51) Int. Cl.: C08J 7/04, E04F 15/10

(54) **REVETEMENT DE SURFACE MULTICOUCHE AVEC COUCHE BARRIERE**
MEHRSCHICHTIGE OBERFLÄCHENBESCHICHTUNG MIT SPERRSCHICHT
MULTILAYER SURFACE COATING WITH BARRIER LAYER

(43) Date de publication de la demande: 18.04.2012
(73) Titulaire: Tarkett G.D.L. S.a., 9559 Lentzweiler (LU)
(72) Inventeur: SICHE, Alexandre, L-9559 Wiltz (LU)
(74) Mandataire: Pronovem
(86) Numéro de dépôt international: PCT/EP2009/057107
(87) Numéro de publication internationale: WO 2010/142325

(56) Documents cités:
- CA-A1- 2 349 052
- DATABASE WPI Week 200141 Thomson Scientific, London, GB; AN 2001-384476 XP002573430 & JP 2001 081216 A (DAINIPPON PRINTING CO LTD) 27 mars 2001 (2001-03-27)

## Description

### Objet de l'invention

La présente invention se rapporte à un revêtement de surface multicouche à base de PVC comprenant une couche barrière à base d'alcool polyvinylique.

### Etat de la technique

Pour la décoration intérieure ou extérieure d'une surface, par exemple d'un bâtiment, d'une habitation, ou d'un véhicule, les revêtements de surface décoratifs à base de polychlorure de vinyle (PVC) sont bien connus et sont largement utilisés.

Toutefois de tels revêtements dits « PVC » présentent l'inconvénient d'être perméables à certaines substances. Pour empêcher ou limiter ce phénomène, mais également pour empêcher ou limiter la pénétration à l'intérieur du revêtement de salissures quelle que soit leur nature, il a été proposé de recouvrir la surface externe de la couche supérieure et apparente du revêtement de surface d'un vernis de protection du type polyuréthane. Toutefois, cette solution ne résout pas le problème du passage dans le revêtement de contaminants présents sur la surface à couvrir, par exemple de contaminants provenant d'un sol bitumeux, ou bien de la colle servant à fixer le revêtement sur la surface. Ces contaminants migrent au travers des différentes couches du revêtement de surface, ce qui entraine une dégradation des performances mécaniques et de l'aspect esthétique du revêtement. Le document JP 2001081216 décrit un film barrière comprenant un alcool polyvinylique ayant un atome de silicium dans sa structure. Le document CA 2349052 décrit un revêtement de sol avec une couche barrière.

De plus, pour la fabrication d'un revêtement de surface à base de PVC, et en particulier d'un produit multicouche, il arrive que la fabrication d'une ou plusieurs des couches du revêtement implique l'emploi de PVC recyclé provenant d'anciens revêtements de surface décoratifs. Or certains composés, par exemple des pigments utilisés dans la couche de décor de ces revêtements recyclés, se retrouvent dans le nouveau revêtement intégrant du PVC recyclé. Dans le cas de pigments, ils entraînent une dégradation de l'aspect esthétique et plus généralement un phénomène de jaunissement du revêtement.

Afin de réduire ou d'éliminer le phénomène de jaunissement et de maintenir les performances mécaniques d'un revêtement à base de PVC, l'emploi d'une couche barrière a été proposé. Généralement, il s'agit d'un film ou d'une enduction à base de polyester ou polyamide. L'alcool polyvinylique, bien connu pour ses propriétés barrières dans les films d'emballage n'est pas utilisé pour une couche PVC, du fait de sa faible adhérence au PVC, et en particulier pour une couche de PVC comprenant une quantité importante de charges minérales.

Classiquement, le doublage d'un film barrière ou l'enduction d'une composition barrière est réalisé sur au moins une face d'un revêtement de surface, généralement entre la couche support et la couche d'usure, éventuellement entre la couche support et la couche décorative du revêtement décoratif.

Si une étape d'enduction ne pose pas de problèmes particuliers, l'emploi d'un film de 10 à 20 µm d'épaisseur présente l'inconvénient de nécessiter une étape de doublage, qui devient particulièrement critique lors de la fabrication en continu d'un revêtement de surface en 4 mètres ou 5 mètres de large par exemple, car de tels films barrières ne sont généralement disponibles qu'en 2 ou 3,5 mètres de large.

De plus, l'emploi d'une couche barrière à base de polyester ou de polyamide rend le recyclage des revêtements à base de PVC, qui les renferment, très difficile, voire impossible, du fait de la nécessité d'un traitement particulier qui n'est pas compatible, ou difficilement compatible, avec la plupart des procédés de recyclage de revêtements de surface en PVC.

### Buts de l'invention

La présente invention propose une solution qui ne présente pas les inconvénients de l'état de la technique.

La présente invention propose un revêtement de surface comportant une couche barrière qui est une alternative aux couches barrières de l'état de la technique et qui est compatible avec le recyclage des revêtements de surface qui la comprennent.

Elle vise également à fournir un revêtement de surface dont les performances mécaniques et l'aspect esthétique sont moins altérés au cours du temps.

### Résumé de l'invention

La présente invention décrit un revêtement de surface multicouche comprenant une couche à base de PVC, ladite couche comprenant des charges inorganiques, ledit revêtement comprenant une couche barrière comprenant de l'alcool polyvinylique et un composé silane, ledit composé silane comprenant au moins une fonction amine.

Selon des formes particulières de réalisation, le revêtement de surface selon l'invention comporte une ou plusieurs, ou une combinaison quelconque de plusieurs des caractéristiques suivantes :
- le composé silane répond à la formule suivante : 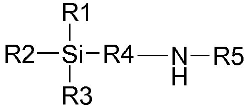
dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égal à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle
- le composé silane est choisi parmi le groupe formé par le 3-aminopropyl-triethoxysilane, 1 e 3-aminopropyl-trimethoxysilane, l'aminoethyl-aminopropyl-silane triol, l'aminoethyl-aminopropyl-trimethoxysilane, le N-(2-Aminoethyl)-3-aminopropyl-trimethoxysilane, le N-(2-Aminoethyl)-3-aminopropyl-methyldimethoxysilane, le N-2-(Benzylamino)-ethyl-3-aminopropyl- trimethoxysilane, le N-2-(Vinylbenzylamino)-ethyl-3-aminopropyl- trimethoxysilane, le N-Cyclohexyl-aminomethyl-methyldiethoxysilane, le N-Cyclohexyl-aminomethyl-triethoxysilane, le N-Cyclohexyl-3-aminopropyl-trimethoxysilane, le N-Phenyl-aminomethyl-trimethoxysilane, et le 3-Ureidopropyl-trimethoxysilane, Vinylbenzyl-aminoethyl-aminopropyl-trimethoxy silane,
- le composé silane représente en poids entre 6 et 40 % du poids de l'alcool polyvinylique,
- ledit revêtement comprend une couche support et une couche d'usure,
- la couche barrière se situe entre la couche support et la couche d'usure et/ou sur l'envers de la couche support,
- la couche à base de PVC, de préférence la couche support, est moussée,
- la couche à base de PVC, de préférence la couche support, est compact,
- ledit revêtement comprend en outre un vernis de protection à base de polyuréthane,
- ledit revêtement étant un revêtement de sol,

La présente invention décrit également un procédé de fabrication d'un revêtement de surface selon l'invention, ledit procédé comprenant une étape d'application d'une composition comprenant de l'alcool polyvinylique et un composé silane comprenant au moins une fonction amine, sur au moins une couche dudit revêtement pour former une couche barrière.

Selon des formes particulières de réalisation, le procédé de fabrication du revêtement de surface selon l'invention comporte une ou plusieurs, ou une combinaison quelconque de plusieurs des caractéristiques suivantes :
- l'application de la composition se fait par impression,
- l'application de la composition se fait sur une largeur de 4 ou 5 mètres,
- la composition est appliquée de manière à former une couche barrière de 0,5 à 10 µm d'épaisseur, à l'état sec, dans le revêtement multicouche,
- l'application de la composition se fait sur l'endroit et/ou l'envers de la couche de support du revêtement multicouche,
- la composition est préparée en élaborant un mélange comprenant entre 80 et 95% en poids d'eau, entre 5 et 20% en poids d'alcool polyvinylique, et éventuellement entre 0,4 et 1,5% en poids d'un agent mouillant, le mélange étant préalablement chauffé, entre 90 et 95°C, avant l'addition à chaud, du composé silane qui représente entre 6 et 40 % en poids (pcr) par rapport à la quantité d'alcool polyvinylique.

### Brève description des figures

La figure 1 représente schématiquement un film ou une couche non-moussable à base de PVC comprenant une couche barrière.
La figure 2 représente schématiquement une première forme de réalisation d'un revêtement de surface multicouche selon l'invention, comprenant une couche barrière.
La figure 3 représente schématiquement une seconde forme de réalisation d'un revêtement de surface multicouche selon l'invention, comprenant une couche barrière.
La figure 4 représente schématiquement une troisième forme de réalisation d'un revêtement de surface multicouche selon l'invention, comprenant une couche barrière.
La figure 5 représente schématiquement une quatrième forme de réalisation d'un revêtement de surface multicouche comprenant une couche barrière.
La figure 6 représente schématiquement une cinquième forme de réalisation d'un revêtement de surface multicouche selon l'invention, comprenant une couche barrière.

### Description détaillée de l'invention

L'originalité de la présente invention réside dans l'emploi d'une composition, comprenant de l'alcool polyvinylique (PVOH) et un composé silane, comme couche barrière pour un revêtement de surface à base de PVC, qu'il soit non-moussable ou moussé. Il peut s'agir d'un revêtement de sol, de mur ou des surfaces intérieures d'un véhicule par exemple.

L'application d'alcool polyvinylique sur un film PVC, de surcroit chargé, nécessite au préalable de le rendre « compatible » avec le substrat PVC, c'est-à-dire d'augmenter son adhérence pour le PVC. La modification du PVC à l'aide d'additifs de type isocyanate n'est pas envisageable car cette solution est, non seulement, très onéreuse, mais impose de traiter le film ou la couche de PVC dans la masse et non en surface. Par ailleurs, l'emploi d'isocyanates présente l'inconvénient de générer des problèmes de viscosité de la couche PVC et des dégagements gazeux toxiques.

De façon surprenante, il a été trouvé qu'une composition, comprenant de l'alcool polyvinylique et un composé silane fonctionnalisé, présente une bonne adhérence sur un film, ou une couche, PVC, en particulier sur une couche PVC comprenant des charges inorganiques, tout en présentant un effet barrière contre la remontée de plastifiants et/ou de contaminants.

La composition, utilisée pour la couche barrière du revêtement de surface selon l'invention, est une solution aqueuse d'alcool polyvinylique comprenant un composé silane fonctionnalisé, ladite composition comprenant éventuellement un agent mouillant, ledit agent mouillant étant de préférence du type polyether-siloxane.

La composition est préparée en élaborant un mélange comprenant entre 80 et 95% en poids d'eau, entre 5 et 20% en poids d'alcool polyvinylique, et éventuellement entre 0,4 et 1,5% en poids d'un agent mouillant. Le mélange est préalablement chauffé, par exemple entre 90 et 95°C, avant l'addition à chaud, par exemple à environ 80°C, du composé silane qui représente entre 6 et 40 % en poids (pcr) par rapport à la quantité d'alcool polyvinylique. La composition est laissée sous agitation à environ 95°C pendant environ 60 minutes.

Le composé silane est choisi parmi les composés silanes ou silanols fonctionnalisés, de préférence des composés silanes ou silanols comprenant au moins une fonction amine.

De préférence, le composé silane répond à la formule chimique suivante : 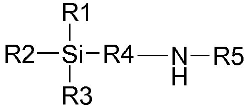 dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égal à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle.

Le composé silane est choisi parmi le groupe formé par le 3-aminopropyl-triethoxysilane, le 3-aminopropyl-trimethoxysilane, l'aminoethyl-aminopropylsilane triol, l'aminoethyl-aminopropyl-trimethoxysilane, le N-(2-Aminoethyl)-3-aminopropyl-trimethoxysilane, le N-(2-Aminoethyl)-3-aminopropyl-methyldimethoxysilane, le N-2-(Benzylamino)-ethyl-3-aminopropyl- trimethoxysilane, le N-2-(Vinylbenzylamino)-ethyl-3-aminopropyl- trimethoxysilane, le N-Cyclohexyl-aminomethyl-methyldiethoxysilane, le N-Cyclohexyl-aminomethyl-triethoxysilane, le N-Cyclohexyl-3-aminopropyl-trimethoxysilane, le N-Phenyl-aminomethyl-trimethoxysilane, et le 3-Ureidopropyl-trimethoxysilane, Vinylbenzyl-aminoethyl-aminopropyl-trimethoxy silane.

Des exemples de compositions dites barrières, selon l'invention, sont donnés dans les tableaux 1 et 2. La proportion des composants est donnée en pourcentage en poids par rapport au poids de l'alcool polyvinylique (pcr).

**Tableau 1 : Exemples de composition**

| | **T** | **1** | **2** | **3** | **4** | **5** |
|---|---|---|---|---|---|---|
| EAU | 809,1 | 809,1 | 809,1 | 809,1 | 809,1 | 809,1 |
| PVOH | 100,0 | 100,0 | 100,0 | 100,0 | 100,0 | 100,0 |
| Sil-1 | 0,0 | 6,0 | 12,5 | 20,0 | 30,0 | 40,0 |
| Agent mouillant | 9,1 | 9,1 | 9,1 | 9,1 | 9,1 | 9,1 |

**Tableau 2 : Exemples de composition**

| | **T** | **6** | **7** | **8** | **9** | **10** |
|---|---|---|---|---|---|---|
| EAU | 809,1 | 809,1 | 809,1 | 809,1 | 809,1 | 809,1 |
| PVOH | 100,0 | 100,0 | 100,0 | 100,0 | 100,0 | 100,0 |
| Sil-2 | 0,0 | 6,0 | 10,0 | 12,5 | 15,0 | 20,0 |
| Agent mouillant | 9,1 | 9,1 | 9,1 | 9,1 | 9,1 | 9,1 |

L'alcool polyvinylique est l'Elvanol^{®} 90-50, l'Elvanol^{®} 71-30, l'Elvanol^{®} 70-75 de Dupont, ou l'Exceval HR 3010, l'Exceval AQ 4104 de Kuraray.

L'agent mouillant est un polyéther polydimethylsiloxane, par exemple le BYK^{®}-307 de BYK, ou le Tego^{®} Wet 270 d'Evonik.

Le composé silane sil-1 est le 3-aminopropyl-triéthoxysilane, par exemple le Z-6011 de Dow Corning^{®}. Le composé silane sil-2 est l'aminoéthyl-aminopropyl-triméthoxysilane, par exemple le Géniosil^{®} GF 9 ou GF 91 de Wacker, ou le Z-6020 de Dow Corning^{®}.

Des compositions comprenant un composé silane fonctionnalisé, présentant un groupement époxy, ou présentant un groupement alkyle, ainsi que des compositions comprenant un mélange d'un silane présentant un groupement époxy, ou un groupement alkyle, et d'un silane ayant au moins un groupement amine, ont également été préparés (tableaux 3 et 4).

**Tableau 3 : Exemples de compositions**

| | **11** | **12** | **13** | **14** | **15** | **16** |
|---|---|---|---|---|---|---|
| Eau | 809,1 | 809,1 | 809,1 | 809,1 | 809,1 | 809,1 |
| PVOH | 100,0 | 100,0 | 100,0 | 100,0 | 100,0 | 100,0 |
| Sil-3 | 6,0 | 12,5 | 20,0 | 0,0 | 0,0 | 0,0 |
| Sil-4 | 0,0 | 0,0 | 0,0 | 6,0 | 12,5 | 20,0 |
| Agent mouillant | 9,1 | 9,1 | 9,1 | 9,1 | 9,1 | 9,1 |

**Tableau 4 : Exemples de compositions**

| | **17** | **18** | **19** |
|---|---|---|---|
| Eau | 809,1 | 809,1 | 809,1 |
| PVOH | 100,0 | 100,0 | 100,0 |
| Sil-3 | 6,25 | 0,0 | 6.25 |
| Sil-4 | 0,0 | 6,25 | 6,25 |
| Sil-2 | 6,25 | 6,25 | 0,0 |
| Agent mouillant | 9,1 | 9,1 | 9,1 |

Le composé silane Sil-3 est le glycidoxy-propyl-triméthoxysilane, par exemple le Z6040 de Dow Corning^{®}, et le composé silane Sil-4 est le N-octyl-triéthoxysilane, par exemple le Z6341 de Dow Corning^{®}.

La composition dite « barrière » présente l'avantage de pouvoir être facilement appliquée sur un film ou une couche PVC, par exemple par impression, par héliogravure ou un dispositif à enduire par rouleau. Il est alors possible d'intégrer l'étape de pose de la couche barrière dans un procédé continu de fabrication de revêtement de surface, autant en 2m de large qu'en 4m, et éventuellement en plus grande largeur.

Pour évaluer l'adhérence de la composition sur une couche à base de PVC, comprenant, ou non, des charges inorganique, la composition est appliquée sous la forme d'une monocouche sur différentes couches à base de PVC, puis elle est séchée, par exemple pendant une minute à 100°C, afin de former un film d'environ 1µm d'épaisseur.

L'adhérence de la composition barrière pour le PVC est ensuite évaluée par une méthode consistant à griffer le produit avec un peigne six dents, puis à évaluer, à l'aide d'un ruban adhésif du type TESA^{®} 4124, la résistance au pelage. L'adhérence est jugée bonne lorsqu'aucune trace de film n'est arrachée au substrat. Une note « 1 » signifie adhérence est bonne et une note « 3 » signifie aucune adhérence. Dans le cas d'une structure sandwich, c'est-à-dire une couche barrière entre deux couches support de même nature, l'adhérence est évaluée par un test de pelage selon la norme NF EN 431. Les résultats sont présentés aux tableaux 5 à 8.

**Tableau 5 : Adhérence des compositions du tableau 1 sur différents supports à base de PVC.**

| | **T** | **1** | **2** | **3** | **4** | **5** |
|---|---|---|---|---|---|---|
| Couche support en PVC recyclé, comprenant des charges | 3 | 1 | 1 | 1 | 1 | 1 |
| Couche support moussable en PVC, comprenant des charges | 3 | 1 | 1 | 1 | 1 | 1 |
| Couche support non-moussable en PVC comprenant des charges | 3 | 2 | 1 | 1 | 1 | 1 |
| Film en PVC comprenant des charges | 3 | 1 | 1 | 1 | 1 | 1 |

**Tableau 6 : Adhérence des compositions du tableau 2 sur différents supports à base de PVC.**

| | **T** | **6** | **7** | **8** | **9** | **10** |
|---|---|---|---|---|---|---|
| Couche support en PVC recyclé, comprenant des charges | 3 | 1 | 1 | 1 | 1 | 1 |
| Couche support moussable en PVC, comprenant des charges | 3 | 2 | 2 | 1 | 1 | 1 |
| Couche support non-moussable en PVC comprenant des charges | 3 | 1 | 1 | 1 | 1 | 1 |
| Film en PVC comprenant des charges | 3 | 1 | 1 | 1 | 1 | 1 |

**Tableau 7 : Adhérence des compositions du tableau 2 sur différents supports à base de PVC.**

| | **11** | **12** | **13** | **14** | **15** | **16** |
|---|---|---|---|---|---|---|
| Couche support en PVC recyclé, comprenant des charges | 3 | 3 | 3 | 3 | 3 | 3 |
| Couche support moussable en PVC, comprenant des charges | 3 | 3 | 3 | 3 | 3 | 3 |
| Couche support non-moussable en PVC comprenant des charges | 3 | 3 | 3 | 3 | 3 | 3 |
| Film en PVC comprenant des charges | 3 | 3 | 3 | 3 | 3 | 3 |

**Tableau 8 : Adhérence des compositions du tableau 3 sur différents supports à base de PVC.**

| | **17** | **18** | **19** |
|---|---|---|---|
| Couche support en PVC recyclé, comprenant des charges | 3 | 3 | 3 |
| Couche support moussable en PVC, comprenant des charges | 3 | 3 | 3 |
| Couche support non-moussable en PVC comprenant des charges | 3 | 1 | 3 |
| Film en PVC comprenant des charges | 3 | 3 | 3 |

La couche support à base de PVC recyclé, qui a été utilisée dans l'évaluation de l'adhérence, comprend 30 % en poids de PVC, 55% de charges inorganiques et 14% en poids de plastifiant.

La couche support moussable à base de PVC, qui a été utilisée dans l'évaluation de l'adhérence, comprend 100 pcr de PVC Pevikon^{®} P682 et Pevikon^{®} DP 2170, 117 pcr de carbonate de calcium (Omya BL 20) utilisé comme charge inorganique, 2,9 pcr d'un agent gonflant, un azodicarbonamide (Porofor ADCL-C2), 1,38 pcr d'oxyde de zinc (ZnO) utilisé pour abaisser la température de décomposition de l'agent gonflant, 0,7 pcr de Titane RC 82, 30,3 pcr de DIHP (Jayflex 77), 26,2 pcr de DIBP (Palatinol^{®} IC), et 14,5 pcr d'un hydrocarbure desaromatisé utilisé comme abaisseur de viscosité (Exxsol D100), « pcr » signifiant pourcentage par rapport à la quantité de PVC.

La couche support non-moussable à base de PVC, utilisée dans l'évaluation de l'adhérence, comprends 100 pcr de PVC Lacovyl PB 1702 H, 156 pcr de charge inorganique (Omya BL20), 45 pcr de DIHP (Jayflex 77), 28 pcr de DIBP (Palatinol IC) et 5 pcr d'abaisseur de viscosité (Exxsol D100), « pcr » signifiant pourcentage par rapport à la quantité de PVC.

Le film en PVC comprenant des charges inorganique, qui a été utilisée dans l'évaluation de l'adhérence, comprend 100 pcr de PVC Evipol 6030, 100 pcr de carbonate de calcium (Imerys Micronic P5) utilisé comme charge inorganique et 33 pcr de plastifiant DINP de chez Exxon et 6 pcr de stabilisant de Lagor (Lastab S DC 1211).

En comparant les différentes compositions testées et une composition témoin (une composition à base d'alcool polyvinylique ne comprenant pas de composé silane - composition T -), il apparait qu'une composition comprenant un composé silane fonctionnalisé comprenant au moins une fonction amine permet d'obtenir une adhérence sur une couche ou un film PVC comprenant des charges inorganiques, que la couche soit non-moussable, ou moussable et expansée.

En outre, des compositions comprenant un mélange de composés silanes, ayant des fonctionnalités différentes, n'améliore pas l'adhérence.

De préférence, le composé silane fonctionnalisé représente entre 6 et 40 pcr (pourcentage par rapport à l'alcool polyvinylique). Avantageusement, pour une couche non-moussable à base de PVC le composé silane fonctionnalisé représente environ 6 pcr, et pour une couche moussable à base de PVC le composé silane fonctionnalisé représente environ 20 pcr.

L'adhérence de la composition dans une application dite « sandwich », entre deux couches support, a été étudiée (tableau 8). On note une amélioration de l'adhérence. Pour une quantité de silane fonctionnalisé, comprenant au moins une fonction amine, de 15 pcr, l'adhérence passe de 0 N/50mm à 23 N/50mm avec une couche support 3 en PVC recyclé, comprenant des charges et à 11 N/50 mm pour une couche support 3 non-moussable en PVC.

**Tableau 8 : Adhérence (en N/50 mm) de compositions selon l'invention sur différents support.**

| composition | **T** | **6** | **7** | **8** | **9** | **10** |
|---|---|---|---|---|---|---|
| Couche support en PVC recyclé, comprenant des charges | 0 | 15 | 9 | 17 | 23 | inséparable |
| Couche support non-moussable en PVC comprenant des charges | 0 | 4 | 4 | 7 | 11 | 28 |

La composition selon l'invention peut être appliquée sous la forme d'une monocouche, ou éventuellement de plusieurs couches successives. L'épaisseur de la couche barrière, ou des couches barrières, dans le revêtement de surface, se situe de préférence entre 0,5 et 10 µm, avantageusement entre 4 et 8 µm.

La couche barrière, de très faible épaisseur, présente l'avantage de permettre au revêtement PVC qui comprend une telle couche barrière, d'être compatible avec les procédés classiques de recyclage de revêtements PVC, et permet donc à de tels revêtements d'être recyclables.

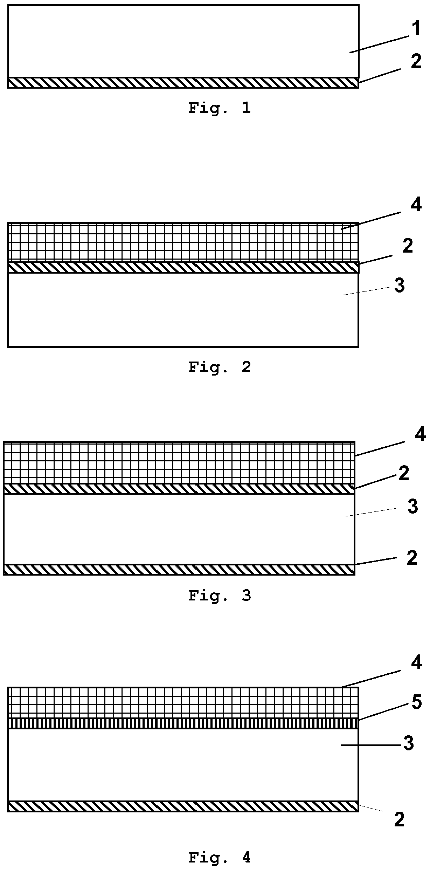

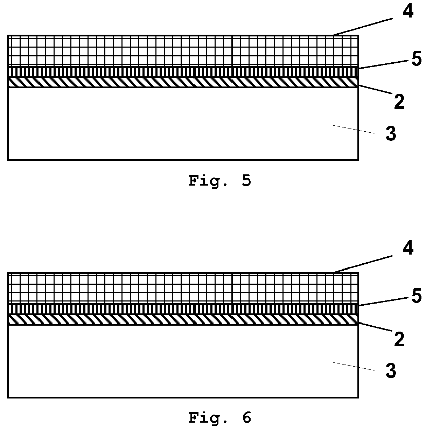

La composition dite « couche barrière » est appliquée sur au moins une des couches d'un revêtement multicouche (figures 1 à 6). La composition est appliquée, de préférence, sur la couche support 3 à base de PVC d'un revêtement multicouche. Eventuellement, une couche décorative 5 peut être appliquée soit sur la partie supérieure de la couche support 3 (figure 4), soit sur la couche barrière 2 recouvrant la couche support 3 d'un revêtement multicouche (figure 5). Ladite couche décorative peut être toute couche adéquate, de préférence, il s'agit d'une encre ou d'un film comprenant un ou plusieurs motifs

La composition couche barrière est appliquée sur l'envers de la couche support 3 et/ou sur l'endroit de la couche support 3. On entend par « envers » la partie inférieure de la couche support 3 qui va entrer en contact avec la surface à recouvrir, étant entendu que l' «endroit» représente la partie supérieure de la couche support 3 qui sera en contact avec la couche d'usure 4.

La couche support 3 peut être non-moussable, ou moussable. Dans le cas d'une couche support 3 moussable, ladite couche comprend un ou plusieurs agents porogènes, tel qu'un sulfonyl hydrazone, par exemple le P,P'-oxy bis benzene sulfonyl hydrazone, ou un azodicarbonamide, par exemple l'Unifoam AZ ULTRA 7043 ou Ultra 1050.

La couche barrière 2 présente une bonne adhérence pour la couche en PVC sur laquelle elle est appliquée, et présente un effet barrière en empêchant la migration des plastifiants et/ou de contaminants au travers du revêtement de surface, et plus particulièrement vers la couche décorative 5 (figures 4 à 6).

L'effet barrière de la composition a été évalué par un test au goudron, qui consiste à déposer du goudron liquide sur l'envers d'un revêtement de surface multicouche qui comprend la couche barrière selon l'invention appliquée sous forme humide entre 7 et 45g/m². On laisse migrer le goudron pendant une semaine à une température d'environ 70°C. Une note comprise entre « 1 » et « 5 » est attribuée en fonction de l'apparition d'une tache sur l'endroit du revêtement de sol. « 1 » signifie qu'il n'y a pas de différence avec un revêtement de surface sans goudron, des notes de « 3 » à « 5 » signifient que le revêtement de surface présente a un aspect qui va de brun foncé à noir. Les résultats sont présentés au tableau 9.

**Tableau 9 : Effet barrière.**

| | Pas de couche barrière | **T** 22g/m² | **10** 7g/m² | **10** 15g/m² | **10** 22g/m² | **10** 35g/m² | **10** 45g/m² |
|---|---|---|---|---|---|---|---|
| sur envers d'une couche support non-moussable | 5 | 1 | 4 | 3 | 1 | 1 | 1 |

De préférence, la composition est appliquée sur la couche support entre 15 et 45g/m² sous forme humide, avantageusement à environ 22g/m², ou environ 35g/m².

Dans le revêtement de surface la couche barrière présente, de préférence, une épaisseur d'au moins 4 à 5 µm.

De préférence, le revêtement de surface multicouche peut comprendre en outre un vernis de protection, par exemple à base de polyuréthane, appliqué sur la face supérieure de la couche d'usure 4.

L'adhérence de la composition à base d'alcool polyvinylique, qu'elle comprenne ou non un composé silane fonctionnalisé, peut également être améliorée par l'emploi d'un primaire d'accrochage appliqué au préalable sur la couche support 3. De préférence, le primaire d'accrochage est un copolymère comprenant des acides acrylique, par exemple le Neocryl^{®} A 1131, ou XK 151 de DSM), une dispersion de polyuréthane, par exemple le Neorez R 989 de DSM), une dispersion de poly-isocyante, par exemple le Bayhydur^{®} VP LS 2240), ou une combinaisons de ces composés. Il est également possible d'utiliser un mélange de dispersions de résines acryliques et de PVC.

### Légende :

- 1 :: couche non-moussable
- 2 :: couche barrière
- 3 :: Couche support
- 4 :: Couche d'usure
- 5 :: Couche décorative

## Revendications

1. Revêtement de surface multicouche comprenant une couche à base de PVC, ladite couche comprenant des charges inorganiques, ledit revêtement comprenant une couche barrière (2) comprenant de l'alcool polyvinylique et un composé silane, ledit composé silane comprenant au moins une fonction amine.

2. Revêtement de surface selon la revendication 1, dans lequel le composé silane répond à la formule suivante : 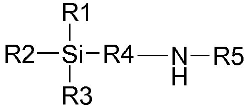 dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égal à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle.

3. Revêtement de surface selon la revendication 1 ou 2, dans lequel le composé silane est choisi parmi le groupe formé par le 3-aminopropyl-triethoxysilane, le 3-aminopropyl-trimethoxysilane, l'aminoethyl-aminopropyl-silane triol, l'aminoethyl-aminopropyl-trimethoxysilane, 1 e N-(2-Aminoethyl)-3-aminopropyl-trimethoxysilane, le N-(2-Aminoethyl)-3-aminopropyl-methyldimethoxysilane, le N-2-(Benzylamino)-ethyl-3-aminopropyl- trimethoxysilane, le N-2-(Vinylbenzylamino)-ethyl-3-aminopropyl- trimethoxysilane, le N-Cyclohexyl-aminomethyl-methyldiethoxysilane, le N-Cyclohexyl-aminomethyl-triethoxysilane, le N-Cyclohexyl-3-aminopropyl-trimethoxysilane, le N-Phenyl-aminomethyl-trimethoxysilane, et le 3-Ureidopropyl-trimethoxysilane, Vinylbenzyl-aminoethyl-aminopropyl-trimethoxy silane.

4. Revêtement de surface selon l'une quelconque des revendications précédentes, dans lequel le composé silane représente en poids entre 6 et 40 % du poids de l'alcool polyvinylique.

5. Revêtement de surface selon l'une quelconque des revendications précédentes, dans lequel ledit revêtement comprend une couche support (3) et une couche d'usure (4).

6. Revêtement de surface selon la revendication 5, dans lequel la couche barrière (2) se situe entre la couche support (3) et la couche d'usure (4) et/ou sur l'envers de la couche support (3).

7. Revêtement de surface selon l'une quelconque des revendications précédentes, dans lequel la couche à base de PVC, de préférence la couche support (3), est moussée.

8. Revêtement de surface selon l'une quelconque des revendications précédentes, dans lequel la couche à base de PVC, de préférence la couche support (3), est compact.

9. Revêtement de surface selon l'une quelconque des revendications précédentes, dans lequel ledit revêtement comprend en outre un vernis de protection à base de polyuréthane.

10. Revêtement de surface selon l'une quelconque des revendications précédentes, ledit revêtement étant un revêtement de sol.

11. Procédé de fabrication d'un revêtement de surface multicouche selon l'une quelconque des revendications 1 à 10 comprenant une étape d'application d'une composition comprenant de l'alcool polyvinylique et un composé silane comprenant au moins une fonction amine, sur au moins une couche dudit revêtement pour former une couche barrière (2).

12. Procédé selon la revendication 11, dans lequel l'application de la composition se fait par impression.

13. Procédé selon la revendication 11 ou 12, dans lequel l'application de la composition se fait sur une largeur de 4 ou 5 mètres.

14. Procédé selon l'une quelconque des revendications 10 à 12, dans lequel la composition est appliquée de manière à former une couche barrière (2) de 0,5 à 10 µm d'épaisseur, à l'état sec, dans le revêtement multicouche.

15. Procédé selon l'une quelconque des revendications 10 à 13, dans lequel l'application de la composition se fait sur l'endroit et/ou l'envers de la couche de support (3) du revêtement multicouche.

16. Procédé selon l'une quelconque des revendications 10 à 14, dans lequel la composition est préparée en élaborant un mélange comprenant entre 80 et 95% en poids d'eau, entre 5 et 20% en poids d'alcool polyvinylique, et éventuellement entre 0,4 et 1,5% en poids d'un agent mouillant, le mélange étant préalablement chauffé, entre 90 et 95°C, avant l'addition à chaud, du composé silane qui représente entre 6 et 40 % en poids (pcr) par rapport à la quantité d'alcool polyvinylique.

## Patentansprüche

1. Mehrschichtige Oberflächenbeschichtung, umfassend eine Schicht auf Basis von PVC, wobei die Schicht anorganische Füllstoffe umfasst, wobei die Beschichtung eine Barriereschicht (2) umfasst, die Polyvinylalkohol und eine Silanverbindung umfasst, wobei die Silanverbindung mindestens eine Aminfunktion umfasst.

2. Oberflächenbeschichtung nach Anspruch 1, wobei die Silanverbindung der folgenden Formel entspricht: 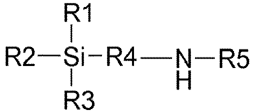 wobei R₁, R₂ und R₃ unabhängig voneinander für eine Hydroxylgruppe, eine Methoxygruppe oder eine Ethoxygruppe stehen und wobei R₄ für eine (CH₂)ₙ-Gruppe steht, wobei n gleich 1, 2 oder 3 ist, und wobei R₅ unabhängig von R₁, R₂ und R₃ für Wasserstoff, eine cyclische oder lineare Alkylgruppe, Phenyl, eine Amidgruppe oder eine Aminoethylgruppe der Formel -C₂H₄-NH-R₇ steht, wobei R₇ für Wasserstoff, Alkyl, eine Phenylgruppe, eine Benzylgruppe oder eine Vinylbenzylgruppe steht.

3. Oberflächenbeschichtung nach Anspruch 1 oder 2, wobei die Silanverbindung aus der Gruppe bestehend aus 3-Aminopropyl-triethoxysilan, 3-Aminopropyl-trimethoxysilan, Aminoethyl-aminopropyl-silantriol, Aminoethyl-aminopropyl-trimethoxysilan, N-(2-Aminoethyl)-3-aminopropyl-trimethoxysilan, N-(2-Aminoethyl)-3-aminopropyl-methyldimethoxysilan, N-2-(Benzylamino)-ethyl-3-aminopropyl-trimethoxysilan, N-2-(Vinylbenzylamino)-ethyl-3-aminopropyl-trimethoxysilan, N-Cyclohexyl-aminomethyl-methyldiethoxysilan, N-Cyclohexyl-aminomethyl-triethoxysilan, N-Cyclohexyl-3-aminopropyl-trimethoxysilan, N-Phenyl-aminomethyl-trimethoxysilan, 3-Ureido-propyl-trimethoxysilan und Vinylbenzyl-aminoethyl-aminopropyl-trimethoxysilan ausgewählt ist.

4. Oberflächenbeschichtung nach einem der vorhergehenden Ansprüche, wobei die Silanverbindung zwischen 6 und 40 Gew.-% des Gewichts des Polyvinylalkohols ausmacht.

5. Oberflächenbeschichtung nach einem der vorhergehenden Ansprüche, wobei die Beschichtung eine Trägerschicht (3) und eine Verschleißschicht (4) umfasst.

6. Oberflächenbeschichtung nach Anspruch 5, wobei sich die Barriereschicht (2) zwischen der Trägerschicht (3) und der Verschleißschicht (4) und/oder auf der Unterseite der Trägerschicht (3) befindet.

7. Oberflächenbeschichtung nach einem der vorhergehenden Ansprüche, wobei die Schicht auf Basis von PVC, vorzugsweise die Trägerschicht (3), verschäumt ist.

8. Oberflächenbeschichtung nach einem der vorhergehenden Ansprüche, wobei die Schicht auf Basis von PVC, vorzugsweise die Trägerschicht (3), kompakt ist.

9. Oberflächenbeschichtung nach einem der vorhergehenden Ansprüche, wobei die Beschichtung ferner einen Schutzlack auf Basis von Polyurethan umfasst.

10. Oberflächenbeschichtung nach einem der vorhergehenden Ansprüche, wobei es sich bei der Beschichtung um einen Bodenbelag handelt.

11. Verfahren zur Herstellung einer mehrschichtigen Oberflächenbeschichtung nach einem der Ansprüche 1 bis 10, umfassend den Schritt des Aufbringens einer Zusammensetzung, die Polyvinylalkohol und eine Silanverbindung mit mindestens einer Aminfunktion umfasst, auf mindestens eine Schicht der Beschichtung zur Bildung einer Barriereschicht (2).

12. Verfahren nach Anspruch 11, bei dem das Aufbringen der Zusammensetzung durch Drucken erfolgt.

13. Verfahren nach Anspruch 11 oder 12, bei dem das Aufbringen der Zusammensetzung auf einer Breite von 4 oder 5 Meter erfolgt.

14. Verfahren nach einem der Ansprüche 10 bis 12, bei dem die Zusammensetzung so aufgebracht wird, dass sie in der mehrschichtigen Beschichtung eine Barriereschicht (2) mit einer Dicke in trockenem Zustand von 0,5 bis 10 µm bildet.

15. Verfahren nach einem der Ansprüche 10 bis 13, bei dem das Aufbringen der Zusammensetzung auf die Oberseite und/oder Unterseite der Trägerschicht (3) der mehrschichtigen Beschichtung erfolgt.

16. Verfahren nach einem der Ansprüche 10 bis 14, bei dem die Zusammensetzung durch Erstellen einer Mischung, die zwischen 80 und 95 Gew.-% Wasser, zwischen 5 und 20 Gew.-% Polyvinylalkohol und gegebenenfalls zwischen 0,4 und 1,5 Gew.-% eines Netzmittels umfasst, hergestellt wird, wobei die Mischung vor der Zugabe der Silanverbindung, die zwischen 6 und 40 Gew.-% (phr), bezogen auf die Menge an Polyvinylalkohol, ausmacht, in der Hitze auf eine Temperatur zwischen 90 und 95°C vorerhitzt wird.

## Claims

1. Multilayer surface coating comprising a PVC-based layer, the said layer comprising inorganic fillers, the said coating comprising a barrier layer (2) comprising polyvinyl alcohol and a silane compound, the said silane compound comprising at least one amine functional group.

2. Surface coating according to Claim 1, in which the silane compound corresponds to the following formula: 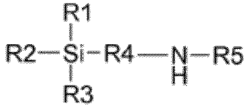 in which R₁, R₂ and R₃ are, independently of one another, either a hydroxyl group, a methoxy group or an ethoxy group and in which R₄ is a (CH₂)ₙ group, n being equal to 1, 2 or 3, and in which R₅ is, independently of R₁, R₂ and R₃, a hydrogen, a linear or cyclic alkyl, a phenyl, an amide group or an aminoethyl group of formula -C₂H₄-NH-R₇, R₇ being a hydrogen, an alkyl, a phenyl group, a benzyl group or a vinylbenzyl group.

3. Surface coating according to Claim 1 or 2, in which the silane compound is chosen from the group formed by (3-aminopropyl)triethoxysilane, (3-aminopropyl)trimethoxysilane, aminoethylamino-propylsilanetriol, aminoethylaminopropyl-trimethoxysilane, N-(2-aminoethyl)-(3-aminopropyl)trimethoxysilane, N-(2-aminoethyl)-(3-aminopropyl)methyldimethoxysilane, N-[2-(benzylamino)ethyl]-(3-aminopropyl)trimethoxysilane, N-[2-(vinylbenzylamino)ethyl]-(3-aminopropyl)-trimethoxysilane, (N-cyclohexylaminomethyl)methyl-diethoxysilane, (N-cyclohexylaminomethyl)tri-ethoxysilane, N-cyclohexyl-(3-aminopropyl)tri-methoxysilane, (N-phenylaminomethyl)trimethoxysilane, (3-ureidopropyl)trimethoxysilane and vinylbenzylaminoethylaminopropyltrimethoxysilane.

4. Surface coating according to any one of the preceding claims, in which the silane compound represents, by weight, between 6 and 40% of the weight of the polyvinyl alcohol.

5. Surface coating according to any one of the preceding claims, in which the said coating comprises a support layer (3) and a wear layer (4).

6. Surface coating according to Claim 5, in which the barrier layer (2) is located between the support layer (3) and the wear layer (4) and/or on the underside of the support layer (3).

7. Surface coating according to any one of the preceding claims, in which the PVC-based layer, preferably the support layer (3), is in the foam form.

8. Surface coating according to any one of the preceding claims, in which the PVC-based layer, preferably the support layer (3), is compact.

9. Surface coating according to any one of the preceding claims, in which the said coating additionally comprises a polyurethane-based protective varnish.

10. Surface coating according to any one of the preceding claims, the said coating being a sol coating.

11. Process for the manufacture of a multilayer surface coating according to any one of Claims 1 to 10, comprising a stage of application of a composition comprising polyvinyl alcohol and a silane compound comprising at least one amine functional group to at least one layer of the said coating in order to form a barrier layer (2).

12. Process according to Claim 11, in which the application of the composition is carried out by printing.

13. Process according to Claim 11 or 12, in which the application of the composition is carried out over a width of 4 or 5 metres.

14. Process according to any one of Claims 10 to 12, in which the composition is applied so as to form a barrier layer (2) with a thickness of 0.5 to 10 µm, in the dry state, in the multilayer coating.

15. Process according to any one of Claims 10 to 13, in which the application of the composition is carried out on the locality and/or the underside of the support layer (3) of the multilayer coating.

16. Process according to any one of Claims 10 to 14, in which the composition is prepared by developing a mixture comprising between 80 and 95% by weight of water, between 5 and 20% by weight of polyvinyl alcohol and optionally between 0.4 and 1.5% by weight of a wetting agent, the mixture being preheated, to between 90 and 95°C, before the addition under hot conditions of the silane compound, which represents between 6 and 40% by weight (phr) with respect to the amount of polyvinyl alcohol.
